# EUROPÄISCHE PATENTSCHRIFT

(11) **EP 1 377 738 B1**
(45) Veröffentlichungstag und Bekanntmachung des Hinweises auf die Patenterteilung: **14.12.2016**
(21) Anmeldenummer: 02712908.9
(22) Anmeldetag: 13.02.2002
(51) Int. Cl.: F02D 41/40, F02D 41/38

(54) **VERFAHREN ZUR STEUERUNG EINER KRAFTSTOFFZUMESSUNG IM MEHRFACHEINSPRITZUNGSBETRIEB**
METHODS FOR CONTROLLING A FUEL METERING IN THE MULTIPLE INJECTION OPERATING MODE
PROCEDES DE COMMANDE DU DOSAGE DE CARBURANT EN MODE D'INJECTION MULTIPLE

(30) Priorität: 27.03.2001 DE 10115966
(43) Veröffentlichungstag der Anmeldung: 07.01.2004
(73) Patentinhaber: Volkswagen Aktiengesellschaft, 38440 Wolfsburg (DE)
(72) Erfinder: POTT, Ekkehard, 38518 Gifhorn (DE); ZILLMER, Michael, 38173 Sickte (DE); BREE, Eric, 38557 Osloss (DE); PHILIPP, Kai, 38179 Lagesbüttel (DE)
(74) Vertreter: Gulde & Partner
(86) Internationale Anmeldenummer: PCT/EP2002/001492
(87) Internationale Veröffentlichungsnummer: WO 2002/077434

(56) Entgegenhaltungen:
- EP-A- 0 856 655
- EP-A- 0 894 965
- EP-A- 1 028 243
- EP-A- 1 045 125

## Beschreibung

Die Erfindung betrifft ein Verfahren zur Steuerung einer Kraftstoffzumessung einer direkteinspritzenden Verbrennungskraftmaschine in einem Mehrfacheinspritzungsbetrieb mit den Merkmalen des Oberbegriffs des Anspruchs 1.

Es sind verschiedene Verfahren bekannt, um eine Abgastemperatur von Verbrennungskraftmaschinen nach einem Kaltstart anzuheben und somit einen Warmlauf eines nachgeschalteten Katalysators zu beschleunigen und diesen in Betriebsbereitschaft zu versetzen.

Bekannt ist, einen Zündwinkel, also einen Zeitpunkt, an dem eine Zündung eines Luft-Kraftstoff-Gemisches in einem Zylinder erfolgt, während des Warmlaufs in Richtung spät bezüglich eines Zündwinkels mit höchstem Wirkungsgrad zu verstellen. Durch diese Zündwinkelspätverstellung wird der Arbeitswirkungsgrad der Verbrennung vermindert und gleichzeitig eine Verbrennungs- beziehungsweise Abgastemperatur erhöht. Infolge des heißeren Abgases wird die Katalysatoraufheizung beschleunigt. Das Verfahren der Spätzündung findet seine Begrenzung bei Zündwinkeln, bei denen eine Laufunruhe der Verbrennungskraftmaschine in unzulässiger Weise steigt oder eine zuverlässige Zündung nicht mehr gewährleistet werden kann.

Ein weiteres Verfahren zur Erhöhung der Abgastemperatur wird durch eine so genannte Mehrfacheinspritzung eröffnet, welche in jüngster Zeit für direkteinspritzende, fremdgezündete Verbrennungskraftmaschinen beschrieben wurde, bei denen der Kraftstoff mittels Einspritzventilen direkt in einen Brennraum eines Zylinders eingespritzt wird (WO 00/08328, EP 0 982 489 A2, WO 00/57045). Dabei wird eine während eines Arbeitsspiels eines Zylinders zuzuführende Kraftstoffgesamtmenge aufgeteilt mit zwei Einspritzvorgängen einem Brennraum des Zylinders zugeführt. Eine erste, frühe Einspritzung (Homogeneinspritzung) erfolgt während eines Ansaugtaktes des Zylinders derart, dass die eingespritzte Kraftstoffmenge zum nachfolgenden Zündzeitpunkt eine im Wesentlichen homogene Verteilung im Brennraum aufweist. Eine zweite, späte Einspritzung (Schichteinspritzung) wird dagegen während eines anschließenden Verdichtungstaktes, insbesondere während der zweiten Hälfte des Verdichtungstaktes, durchgeführt und führt zu einer so genannten Schichtladung, bei der die eingespritzte Kraftstoffwolke sich im Wesentlichen im Bereich um eine Zündkerze des Zylinders konzentriert. Somit liegt im Mehrfacheinspritzungsbetrieb der Verbrennungskraftmaschine ein Mischbetrieb aus Schichtladung und Homogenladung vor. Der Mehrfacheinspritzungsbetrieb führt wegen seines speziell gearteten Brennverlaufs zu einer erhöhten Abgastemperatur gegenüber reinem Homogenbetrieb. Daneben besteht ein weiterer Vorteil der Mehrfacheinspritzung in einer verminderten Rohemission von Stickoxiden NOₓ und unverbrannten Kohlenwasserstoffen HC, die zu einer Senkung des Schadstoffdurchbruchs während der Warmlaufphase führt.

Eine präzise Kraftstoffzumessung während der Mehrfacheinspritzung stellt sich indes problematisch dar. Durch die Aufteilung der insgesamt in einem Arbeitstakt zuzuführenden Kraftstoffmenge auf mindestens zwei Einspritzungen entstehen extrem kurze Ventilöffnungszeiten des unter Hochdruck betriebenen Einspritzventils. Unterschreiten die Ventilöffnungszeiten einen kritischen Wert, dann arbeitet das Einspritzventil im so genannten ballistischen Bereich, der durch eine zunehmende Streuung eines Kraftstoffdurchsatzes gekennzeichnet ist. Das Problem der ungenauen Kraftstoffzumessung verschärft sich im Bereich niedriger Motorlasten und besonders im Leerlauf, wo aufgrund der geringen erforderlichen Kraftstoffmenge besonders kurze Ventilöffnungszeiten vorliegen. Erschwerend kommt hinzu, dass bislang kein Konzept zur rückgekoppelten Regelung des mit zwei oder mehr Einspritzungen erzeugten Luft-Kraftstoff-Verhältnisses existiert.

Zur Lösung des Problems schlägt EP 0 856 655 A2 vor, die Gesamtkraftstoffmenge anzuheben und somit die Ventilöffnungszeiten zu verlängern.

EP 0 894 965 A1 beschreibt die allgemeinen Zusammenhänge zwischen Einspritzdruck des Kraftstoffs, der Einspritzmenge, und der Ventilöffnungszeiten.

EP 1 045 125 A2 beschreibt, die Kraftstoffanteile einzelner Einspritzungen im Mehrfacheinspritzungsbetrieb so zu variieren, dass Geräuschemissionen verringert werden.

Aufgabe der vorliegenden Erfindung ist es, ein Verfahren vorzuschlagen, mit dem eine präzise Kraftstoffzumessung in einem Mehrfacheinspritzungsbetrieb gewährleistet wird. Das Verfahren sollte sich ferner mit geringem prozesstechnischen Aufwand in ein bestehendes Motorsteuerungskonzept integrieren lassen.

Diese Aufgabe wird durch das Verfahren mit den Merkmalen des Anspruchs 1 gelöst.

Gemäß dem erfindungsgemäßen Verfahren ist vorgesehen, dass bei unveränderter, innerhalb des Arbeitsspiels zugeführter Gesamtkraftstoffmenge und bei voneinander abweichenden Kraftstoffanteilen und Ventilöffnungszeiten der einzelnen Einspritzungen des Arbeitsspiels eine in einer kürzeren Einspritzung eingespritzte Kraftstoffmenge auf Kosten mindestens einer längeren Einspritzung soweit angehoben wird, dass eine sich einstellende Ventilöffnungszeit des Einspritzventils bei wenigstens einer Einspritzung des Arbeitsspiels eine vorgegebene Ventilöffnungszeit nicht unterschreitet, wobei die vorgegebene Ventilöffnungszeit mindestens einer kritischen Ventilöffnungszeit entspricht, bei der eine noch tolerierbare mittlere Streuung eines Kraftstoffdurchsatzes vorliegt.

Die erfindungsgemäße Veränderung der Kraftstoffanteile findet selbstverständlich dort ihre Grenze, wo die sich verkürzende längere Einspritzung ihrerseits die kritische vorgegebene Ventilöffnungszeit erreicht. Führt diese Maßnahme allein nicht zu den gewünschten Ventilöffnungszeiten, so kann unterstützend eine Absenkung des Drucks (nachfolgend als Raildruck bezeichnet), unter welchem der Kraftstoff dem Einspritzventil vorgelagert wird, erfolgen.

Nach einer bevorzugten Ausgestaltung des Verfahrens wird dementsprechend ferner bei unveränderter, innerhalb des Arbeitsspiels zugeführter Gesamtkraftstoffmenge der Raildruck, derart vorgegeben, dass die sich einstellende Ventilöffnungszeit des Einspritzventils bei wenigstens einer Einspritzung des Arbeitsspiels die vorgegebene Ventilöffnungszeit nicht unterschreitet. Vorzugsweise wird der Raildruck derart vorgegeben, dass das Einspritzventil bei keinem der in dem Arbeitsspiel durchzuführenden Einspritzvorgänge im ballistischen Bereich arbeitet. Der Raildruck wird dabei abgesenkt, wenn die gegenwärtig vorliegenden oder erforderlichen Ventilöffnungszeiten die vorgegebene kritische Ventilöffnungszeit erreichen beziehungsweise unterschreiten. Der abgesenkte Raildruck bedingt einen reduzierten Kraftstoffdurchsatz des Einspritzventils und somit sich in Abhängigkeit des Raildrucks einstellende verlängerte Ventilöffnungszeiten. Somit kann ein Betrieb der Einspritzventile im so genannten ballistischen Bereich vermieden und die Kraftstoffzumessung mit hoher Genauigkeit gesteuert werden.

Nach einer bevorzugten Ausgestaltung des Verfahrens wird der Raildruck auf höchstens 35 bar, insbesondere auf höchstens 30 bar, vorzugsweise auf höchstens 25 bar, eingestellt. Dies bedeutet gegenüber üblichen Raildrücken von 40 bis 120 bar eine deutliche Absenkung.

Die Absenkung des Raildrucks kann pauschal während des gesamten Mehrfacheinspritzungsbetriebes erfolgen. Es ist jedoch bevorzugt vorgesehen, den Raildruck in Abhängigkeit von einer Motorlast und/oder von einer Motordrehzahl zu beeinflussen. Hierbei wird auf in einer Motorsteuerung abgelegte Kennfelder zurückgegriffen, die betriebspunktabhängig die Ermittlung des optimalen Raildrucks gestatten. Dabei ist der optimale Raildruck stets derjenige größtmögliche Druck, bei dem die vorgegebene kritische Ventilöffnungszeit nicht unterschritten wird.

Für den Fall, dass alle Ventilöffnungszeiten der Einspritzungen eines Arbeitsspiels und/oder falls trotz Variation der Kraftstoffanteile der einzelnen Einspritzungen zwangsläufig mindestens eine Ventilöffnungszeit einer Einspritzung unterhalb der vorgegebenen Ventilöffnungszeit liegt, kann gemäß einer weiteren Ausbildung des Verfahrens dieser Zustand zunächst toleriert werden. Erst, wenn ein korrigierender Reglereingriff eines Lambdareglers soweit zunimmt, dass er eine vorgebbare Schwelle überschreitet, wird die innerhalb eines Arbeitsspiels zugeführte Gesamtkraftstoffmenge angehoben. Dies geschieht vorzugsweise durch Anhebung aller in den einzelnen Einspritzungen zugeführten Kraftstoffmengen proportional zu ihren Kraftstoffanteilen. Auch diese Maßnahme kann besonders vorteilhaft mit der Raildruckabsenkung kombiniert werden. Es empfiehlt sich ferner, ein durch die angehobene Gesamtkraftstoffmenge erzeugtes zusätzliches Nutzmoment durch motorwirkungsgradmindernde Maßnahmen, insbesondere durch Verstellung eines Zündwinkels, vorzugsweise in Richtung eines späteren Zündzeitpunktes, zumindest teilweise zu kompensieren. Anstelle der Anhebung der zugeführten Gesamtkraftstoffmenge oder falls diese ein tolerierbares Maß überschreitet, kann ferner vorgesehen sein, den Mehrfacheinspritzungsbetrieb zu sperren. In diesem Fall kann auf andere Katalysatorheizmaßnahmen, beispielsweise auf eine Einzeleinspritzung mit Spätzündung, zurückgegriffen werden.

Wie bereits mehrfach erwähnt, können die Maßnahmen der Raildruckabsenkung mit der Variation der Kraftstoffanteile der einzelnen Einspritzungen und/oder der Gesamtkraftstoffmenge besonders vorteilhaft kombiniert werden, um Ventilöffnungszeiten oberhalb der vorgegebenen Ventilöffnungszeiten zu gewährleisten.

Die Vorgabe der kritischen Ventilöffnungszeit richtet sich im Wesentlichen nach einer tolerierbaren Streuung eines Kraftstoffdurchsatzes des Einspritzventils. Dabei entspricht die vorgegebene Ventilöffnungszeit einer Schwelle, oberhalb derer das Einspritzventil mit einer mittleren Streuung des Kraftstoffdurchsatzes von höchstens ± 20 %, insbesondere von höchstens ± 15 %, vorzugsweise von höchstens ± 10 %, arbeitet. Da der öffnungszeitabhängige Verlauf der mittleren Streuung des Kraftstoffdurchsatzes von der Bauart eines Einspritzventils abhängt, lassen sich konkrete Ventilöffnungszeit-Mindestvorgaben nur schwer benennen. Als Anhaltspunkt kann für derzeit übliche Hochdruckeinspritzventile eine tolerierbare Öffnungszeitschwelle von 550 µs, insbesondere 600 µs, vorzugsweise 700 µs, als Grenze des ballistischen Bereiches genannt werden. Diese Werte können je nach Ausführung des Hochdruckeinspritzventils erheblich nach oben und nach unten abweichen. Bekannt sind auch Ventile mit einer tolerierbaren Öffnungszeitschwelle von 300 µs, insbesondere von 350 µs, vorzugsweise von 450 µs.

Neben dem Problem der kurzen Ventilöffnungszeiten und der damit zusammenhängenden ungenauen Kraftstoffzumessung mangelt es bislang an einem Konzept, welches eine rückgekoppelte Regelung der Kraftstoffzumessung der einzelnen Einspritzungen eines Arbeitsspiels anhand eines einzigen Abgassignals gestattet. Eine weitere Ausführung des Verfahrens sieht in diesem Zusammenhang vor, eine durch eine einzelne Einspritzung eines Arbeitsspiels einzuspritzende Kraftstoffmenge zu regeln und die durch die mindestens eine weitere Einspritzung des Arbeitsspiels einzuspritzende Kraftstoffmenge vorzusteuern. Im konkreten Fall von zwei Einspritzungen, von denen eine erste in einem Ansaugtakt eines Zylinders und eine zweite in einem Verdichtungstakt erfolgt, ergeben sich demnach die zwei Möglichkeiten, die frühe Einspritzung vorzusteuern und die späte Einspritzung zu regeln oder die frühe Einspritzung zu regeln und die späte Einspritzung vorzusteuern. Dabei erfolgt die Vorsteuerung in an sich bekannter Weise anhand von abgespeicherten Kennfeldern, die eine Motorlastanforderung, insbesondere eine Drosselklappenstellung in einem Luftansaugrohr und/oder ein Pedalwertgebersignal, mit einer erforderlichen Kraftstoffmenge korrelieren. Ein so ermittelter Vorsteuerwert für die vorgesteuerte Einspritzung wird dann beibehalten, wohingegen die entsprechend andere Einspritzung in bekannter Weise anhand einer im Abgas gemessenen Konzentration mindestens einer Abgaskomponente, insbesondere von Sauerstoff, geregelt wird. Alternativ kann vorgesehen sein, alle Einspritzungen eines Arbeitsspiels proportional zu ihren einzuspritzenden Kraftstoffanteilen zu regeln. Es ist ferner vorgesehen, dass bis zu einem Zeitpunkt, zu dem ein Gassensor, der die Konzentration der Abgaskomponente erfasst, insbesondere eine Lambdasonde, eine Betriebsbereitschaft nach einem Motorstart erreicht hat, alle Einspritzungen eines Arbeitsspiels vorgesteuert werden. Dabei bestimmt sich ein zeitlicher Verzug bis zur Herstellung der Betriebsbereitschaft im Wesentlichen durch eine Mindesttemperatur des Gassensors und eine Abgaslauflänge zwischen Zylinder und Gassensor.

Weitere vorteilhafte Ausgestaltungen sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch den Aufbau eines Zylinders einer Verbrennungskraftmaschine sowie zugeordnete Steuerungselemente und
- Figur 2: einen Verlauf einer mittleren Streuung einer durchgesetzten Kraftstoffmenge in Abhängigkeit von einer Öffnungszeit eines Einspritzventils.

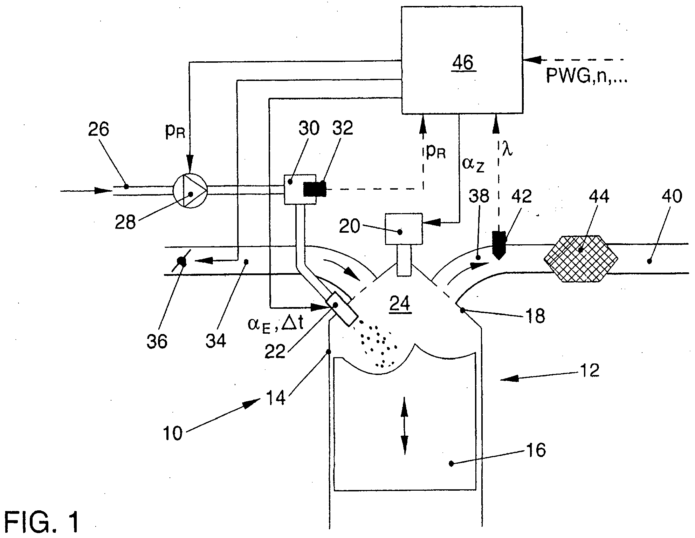

Von einer fremdgezündeten, magerlauffähigen Viertakt-Verbrennungskraftmaschine 10 ist in Figur 1 lediglich ein Zylinder 12 exemplarisch dargestellt. In einem Zylindergehäuse 14 des Zylinders 12 ist ein Kolben 16 axial beweglich angeordnet. In einem Zylinderkopf 18 des Zylindergehäuses 14 befindet sich an einer zentralen oberen Position eine Zündkerze 20 mit Zündspule sowie an einer seitlichen Position ein Hochdruckeinspritzventil 22, mit welchem eine direkte Einspritzung von Kraftstoff in einen Brennraum 24 des Zylinders 12 möglich ist. Die Versorgung des Einspritzventils 22 mit Kraftstoff erfolgt über eine Kraftstoffleitung 26. Der Kraftstoff wird aus einem nicht dargestellten Kraftstofftank mittels einer ebenfalls nicht dargestellten Kraftstoffpumpe gefördert und auf einen geringen Vordruck gebracht. Eine Hochdruckpumpe 28 dient der Erzeugung eines Kraftstoffdruckes, der im üblichen Fahrzeugbetrieb zwischen 40 und 120 bar beträgt und in Abhängigkeit von einem Betriebspunkt der Verbrennungskraftmaschine 10 vorgegeben wird. Zusammen mit einem nicht dargestellten Drucksteuerventil sorgt die Hochdruckpumpe 28 ferner für einen Ausgleich von Druckschwankungen in einer dem Einspritzventil 22 vorgeschalteten Kraftstoffleiste 30. Entsprechend der englischen Bezeichnung der Leiste 30 (Rail) wird der Druck, mit dem der Kraftstoff dem Einspritzventil 22 vorgelagert wird, im Folgenden als Raildruck p_{R} bezeichnet. Die Erfassung des Raildrucks p_{R} erfolgt mittels eines in der Leiste 30 angeordneten Drucksensors 32. In den Zylinderkopf 18 des Zylinders 12 mündet ferner ein Lufteinlasskanal 34, welcher der Zuführung von Frischluft dient, wobei ein Luftmassenstrom über die Stellung einer in dem Lufteinlasskanal 34 angeordneten Drosselklappe 36 gesteuert wird. Darüber hinaus mündet ein Auslassrohr 38 in den Brennraum 24, um ein von dort kommendes Abgas zusammen mit Abgasen der anderen Zylinder in einem Abgaskanal 40 zu leiten. Eine im Auslassrohr 38 oder im Abgaskanal 40 angeordnete Lambdasonde 42 erfasst einen Sauerstoffanteil des Abgases und ermöglicht eine Regelung des der Verbrennungskraftmaschine 10 beziehungsweise den Zylindern 12 zuzuführenden Luft-Kraftstoff-Verhältnisses. Eine Konvertierung von Schadstoffen des Abgases erfolgt mittels mindestens eines im Abgaskanal 40 angeordneten Katalysators 44.

Eine Steuerung oder Regelung eines Betriebszustandes der Verbrennungskraftmaschine 10 erfolgt durch ein Motorsteuergerät 46 unter Berücksichtigung einer Vielzahl verfügbarer Betriebsdaten.

Insbesondere nach einem Motorkaltstart hat der Katalysator 44 in aller Regel seine, für eine ausreichende Schadstoffkonvertierung erforderliche Betriebstemperatur noch nicht erreicht. Dieses wird durch das Motorsteuergerät 46 beispielsweise anhand eines vor, hinter oder im Katalysator 44 erfassten Temperatursensorsignals erkannt. Um eine Abgastemperatur anzuheben und den Warmlauf des Katalysators 44 zu beschleunigen, schaltet die Motorsteuerung 46 die Verbrennungskraftmaschine 10 in einen Mehrfacheinspritzungsbetrieb um. Dabei wird in einem Ansaugtakt des Zylinders 12 eine erste frühe Kraftstoffeinspritzung mittels des Einspritzventils 22 vorgenommen und in einem anschließenden Verdichtungstakt, insbesondere in der zweiten Hälfte des Verdichtungstaktes, eine zweite späte Kraftstoffeinspritzung. Die entsprechenden Einspritzwinkel α_{E} und Ventilöffnungszeiten Δt des Einspritzventils 22, ebenso wie ein Zündwinkel α_{Z} der Zündkerze 20, werden durch die Motorsteuerung 46 vorgegeben. Der in der frühen Einspritzung zugeführte Kraftstoff liegt zum Zündzeitpunkt α_{Z} in einer im Wesentlichen homogenen Gemischaufbereitung im Brennraum 24 vor. Hingegen bildet der in der späten Einspritzung zugeführte Kraftstoff eine Schichtladungswolke aus, die sich zum Zündzeitpunkt α_{Z} im Bereich der Zündkerze 20 konzentriert. Die Ausbildung dieser so genannten Schichtladung wird durch eine spezielle muldenförmige Ausgestaltung des Kolbenbodens des Kolbens 16 unterstützt. Die Aufteilung der insgesamt während eines Arbeitsspiels des Zylinders 12 zuzuführenden Gesamtkraftstoffmenge auf zwei Einspritzvorgänge erfordert sehr geringe Ventilöffnungszeiten Δt des Einspritzventils 22 und wirft das Problem einer ungenauen Kraftstoffzumessung auf.

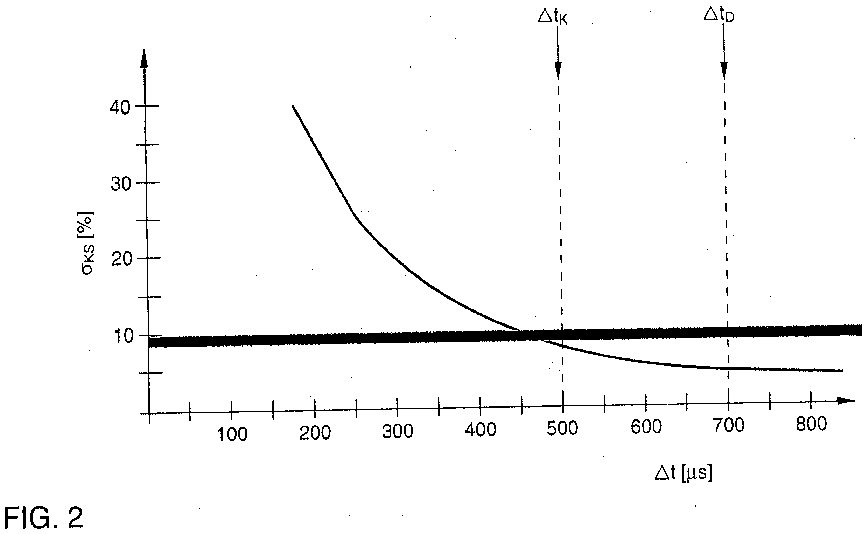

Zur Verdeutlichung ist eine prozentuale mittlere Streuung der durchgesetzten Kraftstoffmenge σ_{KS} in Abhängigkeit von der Ventilöffnungszeit Δt in Figur 2 dargestellt. Oberhalb einer Ventilöffnungszeit von etwa 700 µs erfolgt der Kraftstoffdurchsatz mit einer annähernd konstanten Streuung σ_{KS} auf niedrigem Niveau bei etwa 5 %. Unterhalb Δt_{b} arbeitet das Einspritzventil 22 im so genannten ballistischen Bereich. Dieser ist gekennzeichnet durch eine mit kleiner werdenden Öffnungszeiten schnell zunehmende Streuung der durchgesetzten Kraftstoffmenge σ_{KS}. Diese stochastische Streuung der Kraftstoffzumessung zwischen den einzelnen Arbeitsspielen des Zylinders 12 führen zu einem ständigen und hohen Eingriff der Lambdaregelung sowie einer insgesamt ungenauen Einstellung des Luft-Kraftstoff-Verhältnisses. Bei einem typischen Raildruck p_{R} im Leerlauf der Verbrennungskraftmaschine 10 von 40 bis 120 bar liegen die Ventilöffnungszeiten der beiden Einspritzungen des Mehrfacheinspritzungsbetriebes üblicherweise im Bereich von 350 bis 500 µs und damit im unpräzisen ballistischen Bereich. Erfindungsgemäß ist daher vorgesehen, den Raildruck p_{R} und/oder die insgesamt zuzuführende Kraftstoffmenge und/oder die Anteile der in den Einspritzungen zuzuführenden Kraftstoffmengen an der Gesamtkraftstoffmenge derart vorzugeben beziehungsweise zu variieren, dass eine vorgegebene kritische Ventilöffnungszeit Δt_{K} nicht unterschritten wird. Gemäß der in Figur 2 beispielhaft dargestellten Kurve würde bei einer maximal tolerierbaren Streuung der Kraftstoffzumessung von etwa ± 10 % eine kritische Ventilöffnungszeit Δt_{K} von etwa 500 µs vorzugeben sein. Vorzugsweise erfolgt jedoch eine strengere Vorgabe nahe oder gleich der ballistischen Grenze Δt_{b}. Es sei jedoch nochmals darauf hingewiesen, dass die dargestellte Kurve sowie die genannten Werte lediglich beispielhaft zu verstehen sind und stark von der Bauart des Einspritzventils 22 abhängen.

Erkennt die Motorsteuerung 46, dass die Ventilöffnungszeit Δt der frühen und/oder der späten Einspritzung unterhalb der vorgegebenen Öffnungszeit Δt_{K} liegt, so hebt sie zunächst die in dieser kürzeren Einspritzung zuzuführende Kraftstoffmenge auf Kosten der längeren Einspritzung an. Diese Variation der Einspritzanteile findet dort ihre Grenze, wo die längere Einspritzung selbst soweit reduziert wird, dass auch sie in den ballistischen Bereich des Einspritzventils 22 gerät. Liegen beide Einspritzungen im ballistischen Bereich, so wird dies so lange toleriert, bis ein korrigierender Reglereingriff der Lambdaregelung eine vorgegebene Schwelle überschreitet. Erst dann wird die insgesamt zuzuführende Kraftstoffmenge angehoben, wobei sich die Ventilöffnungszeiten Δt beider Einspritzungen soweit verlängern, dass möglichst beide Einspritzungen mit Ventilöffnungszeiten Δt oberhalb der vorgegebenen Grenze Δt_{K} arbeiten. Ein durch die angehobene Gesamtkraftstoffmenge erzeugtes Motornutzmoment kann durch Verstellung des Zündwinkels α_{Z}, vorzugsweise in Richtung eines späteren Zeitpunktes, weitgehend kompensiert werden. Alternativ zu diesen Maßnahmen oder zusätzlich kann der Raildruck p_{R} im Mehrfacheinspritzungsbetrieb vorzugsweise auf unterhalb 25 bar abgesenkt werden. Dabei ist besonders vorteilhaft vorgesehen, die Raildruckabsenkung in Abhängigkeit einer durch ein Pedalwertgebersignal PWG ausgedrückten Motorlast und/oder einer Motordrehzahl n zu steuern. Dabei wird bei geringeren Motorlasten, bei denen naturgemäß die erforderliche Kraftstoffmenge und damit die Ventilöffnungszeiten Δt gering sind, ein niedrigerer Raildruck p_{R} vorgegeben als bei hohen Motorlasten.

Es ist weiterhin vorgesehen, eine der beiden Einspritzungen des Mehrfacheinspritzungsbetriebs, beispielsweise die frühe im Ansaugtakt erfolgende Einspritzung, vorzusteuern und die andere Einspritzung, beispielsweise die späte im Verdichtungstakt erfolgende Einspritzung, zu regeln. Dafür wird zunächst in Abhängigkeit von der angeforderten Motorlast, insbesondere von einem Pedalwertgebersignal PWG, ein erforderlicher Luftmassenstrom von der Motorsteuerung 46 ermittelt und eine entsprechende Ansteuerung der Drosselklappe 36 vorgenommen. Gleichzeitig beziehungsweise in Abhängigkeit von der Drosselklappenstellung berechnet die Motorsteuerung 46 die erforderliche, insgesamt zuzuführende Kraftstoffmenge und teilt diese entsprechend einer optimalen Vorgabe auf die beiden Kraftstoffeinspritzungen auf. Dabei wird für die gesteuerte, frühe Einspritzung die Ventilöffnungszeit Δt des Einspritzventils 22 anhand von abgespeicherten Kennfeldern vorgegeben und konstant gehalten. Demgegenüber wird die geregelte, späte Einspritzung mittels des durch die Lambdasonde 42 erfassten Lambdasignals im Abgas geregelt. Dafür erfolgt eine Anpassung der Ventilöffnungszeit Δt der späten Einspritzung in Abhängigkeit von einer Abweichung des gemessenen Lambdawertes von einer Sollvorgabe. Alternativ können auch die Ventilöffnungszeiten Δt beider Einspritzungen proportional zu ihrem Anteil an der Gesamtventilöffnungszeit beziehungsweise der Gesamteinspritzmenge geregelt werden.

Die erfindungsgemäßen Maßnahmen gewährleisten mit einfachen Mitteln eine präzise Kraftstoffzumessung im Mehrfacheinspritzungsbetrieb und ermöglichen somit eine Applikation des Mehrfacheinspritzungsbetriebes über weite Betriebsbereiche, insbesondere auch im , Niedriglast- und Leerlaufbetrieb. Das Verfahren lässt sich ohne konstruktiven Mehraufwand in einfacher Weise in ein bestehendes Motorsteuerungskonzept integrieren.

### BEZUGSZEICHENLISTE

- 10: Verbrennungskraftmaschine
- 12: Zylinder
- 14: Zylindergehäuse
- 16: Kolben
- 18: Zylinderkopf
- 20: Zündkerze
- 22: Einspritzventil
- 24: Brennraum
- 26: Kraftstoffleitung
- 28: Hochdruckpumpe
- 30: Kraftstoffleiste (Rail)
- 32: Drucksensor
- 34: Lufteinlasskanal
- 36: Drosselklappe
- 38: Auslassrohr
- 40: Abgaskanal
- 42: Gassensor / Lambdasonde
- 44: Katalysator
- 46: Motorsteuergerät

- α_{E}: Einspritzwinkel
- α_{Z}: Zündwinkel
- λ: Luftzahl Lambda
- Δt: Ventilöffnungszeit
- Δt_{b}: Grenze der Ventilöffnungszeit zum ballistischen Bereich
- Δt_{K}: kritische Ventilöffnungszeit
- n: Motordrehzahl
- p_{R}: Raildruck
- PWG: Pedalwertgebersignal
- σ_{KS}: mittlere Streuung des Kraftstoffdurchsatzes

## Patentansprüche

1. Verfahren zur Steuerung einer Kraftstoffzumessung einer direkteinspritzenden Verbrennungskraftmaschine (10) in einem Mehrfacheinspritzungsbetrieb, bei dem eine in einem Arbeitsspiel eines Zylinders (12) der Verbrennungskraftmaschine (10) zuzuführende Gesamtkraftstoffmenge in Abhängigkeit von einer angeforderten Motorlast ermittelt wird und die Gesamtkraftstoffmenge während des Arbeitsspiels des Zylinders (12) der Verbrennungskraftmaschine (10) mittels eines Einspritzventils (22) mit mindestens zwei Kraftstoffeinspritzungen in den Zylinder (12) eingespritzt wird, **dadurch gekennzeichnet, dass** bei unveränderter, innerhalb des Arbeitsspiels zugeführter Gesamtkraftstoffmenge und bei voneinander abweichenden Kraftstoffanteilen und Ventilöffnungszeiten (Δt) der einzelnen Einspritzungen des Arbeitsspiels eine in einer kürzeren Einspritzung eingespritzte Kraftstoffmenge auf Kosten mindestens einer längeren Einspritzung soweit angehoben wird, dass eine sich einstellende Ventilöffnungszeit (Δt) des Einspritzventils (22) bei wenigstens einer Einspritzung des Arbeitsspiels eine vorgegebene Ventilöffnungszeit nicht unterschreitet, wobei die vorgegebene Ventilöffnungszeit mindestens einer kritischen Ventilöffnungszeit (Δt_{K}) entspricht, bei der eine noch tolerierbare mittlere Streuung eines Kraftstoffdurchsatzes (σ_{KS}) vorliegt

2. Verfahren nach Anspruch 1, **dadurch gekennzeichnet, dass** ferner bei unveränderter, innerhalb des Arbeitsspiels zugeführter Gesamtkraftstoffmenge ein Druck (Raildruck, p_{R}), unter welchem der Kraftstoff dem Einspritzventil (22) vorgelagert wird, derart vorgegeben, dass die sich einstellende Ventilöffnungszeit (Δt) des Einspritzventils (22) bei wenigstens einer Einspritzung des Arbeitsspiels die vorgegebene Ventilöffnungszeit nicht unterschreitet.

3. Verfahren nach Anspruch 2, **dadurch gekennzeichnet, dass** der Raildruck (p_{R}) auf höchstens 35 bar, insbesondere auf höchstens 30 bar, vorzugsweise auf höchstens 25 bar, eingestellt wird.

4. Verfahren nach einem der Ansprüche 2 bis 3, **dadurch gekennzeichnet, dass** der Raildruck (p_{R}) in Abhängigkeit von einer Motorlast und/oder einer Motordrehzahl gesteuert wird.

5. Verfahren nach einem der Ansprüche 1 bis 4, **dadurch gekennzeichnet, dass**, falls alle Ventilöffnungszeiten (Δt) der Einspritzungen eines Arbeitspiels unterhalb der vorgegebenen Ventilöffnungszeit liegen und/oder trotz Variation der Kraftstoffanteile der einzelnen Einspritzungen mindestens eine Ventilöffnungszeit (Δt) mindestens einer Einspritzung unterhalb der vorgegebenen Ventilöffnungszeit (Δt_{K}) liegt, die innerhalb eines Arbeitsspiels zugeführte Gesamtkraftstoffmenge soweit angehoben wird, dass die sich einstellende Ventilöffnungszeit (Δt) wenigstens einer Einspritzung des Arbeitsspiels die vorgegebene Ventilöffnungszeit nicht unterschreitet.

6. Verfahren nach Anspruch 5, **dadurch gekennzeichnet, dass** die innerhalb eines Arbeitsspiels zugeführte Gesamtkraftstoffmenge erst angehoben wird, wenn ein Reglereingriff eines Lambdareglers eine vorgebbare Schwelle überschreitet.

7. Verfahren nach einem der Ansprüche 5 oder 6, **dadurch gekennzeichnet, dass** ein durch die angehobene Gesamtkraftstoffmenge erzeugtes Nutzmoment durch motorwirkungsgradmindernde Maßnahmen, insbesondere durch Verstellung eines Zündwinkels, zumindest teilweise kompensiert wird.

8. Verfahren nach einem der Ansprüche 1 bis 4, **dadurch gekennzeichnet, dass**, falls alle Ventilöffnungszeiten (Δt) der Einspritzungen eines Arbeitspiels unterhalb der vorgegebenen Ventilöffnungszeit liegen und/oder trotz Variation der Kraftstoffanteile der einzelnen Einspritzungen mindestens eine Ventilöffnungszeit (Δt) einer Einspritzung unterhalb der vorgegebenen Ventilöffnungszeit liegt, der Mehrfacheinspritzungsbetrieb gesperrt wird.

9. Verfahren nach einem der vorhergehenden Ansprüche, **dadurch gekennzeichnet, dass** die vorgegebene Ventilöffnungszeit einer ballistischen Ventilöffnungszeit (Δt_{b}) entspricht.

10. Verfahren nach einem der vorhergehenden Ansprüche, **dadurch gekennzeichnet, dass** oberhalb der vorgegebenen Ventilöffnungszeit das Einspritzventil (22) mit einer mittleren Streuung eines Kraftstoffdurchsatzes (σ_{KS}) von höchstens ± 20 %, insbesondere von höchstens ± 15 %, insbesondere von höchstens ± 10 %, arbeitet.

11. Verfahren nach einem der vorhergehenden Ansprüche, **dadurch gekennzeichnet, dass** die vorgegebene Ventilöffnungszeit 550 µs, insbesondere 600 µs, insbesondere 700 µs, entspricht.

12. Verfahren nach Anspruch 11, **dadurch gekennzeichnet, dass** die vorgegebene Ventilöffnungszeit 300 µs, insbesondere 350 µs, insbesondere 450 µs, entspricht.

13. Verfahren nach einem der vorhergehenden Ansprüche, **dadurch gekennzeichnet, dass** eine durch eine Einspritzung eines Arbeitsspiels einzuspritzende Kraftstoffmenge abhängig von einer Abweichung einer Ist-Kraftstoffmenge von einer Soll-Kraftstoffmenge geregelt und eine durch die mindestens eine weitere Einspritzung des Arbeitsspiels einzuspritzende Kraftstoffmenge vorgesteuert wird.

14. Verfahren nach einem der vorhergehenden Ansprüche, **dadurch gekennzeichnet, dass** alle Einspritzungen eines Arbeitsspiels abhängig von der Abweichung der Ist-Kraftstoffmenge von der Soll-Kraftstoffmenge proportional zu ihren einzuspritzenden Kraftstoffanteilen geregelt werden.

15. Verfahren nach Anspruch 13 oder 14, **dadurch gekennzeichnet, dass** bis zu einem Erreichen einer Betriebsbereitschaft eines Gassensors zur Erfassung der Konzentration der Abgaskomponente, insbesondere einer Lambdasonde, alle Einspritzungen eines Arbeitsspiels vorgesteuert werden.

16. Verfahren nach einem der Ansprüche 13 bis 15, **dadurch gekennzeichnet, dass** die Vorsteuerung mittels motorlastabhängiger Kennfelder erfolgt.

17. Verfahren nach einem der Ansprüche 13 bis 16, **dadurch gekennzeichnet, dass** die Regelung der einzuspritzenden Soll-Kraftstoffmenge anhand einer im Abgas gemessenen Konzentration mindestens einer Abgaskomponente, insbesondere von Sauerstoff, erfolgt.

## Claims

1. Method for controlling a metering of fuel in a direct-injection internal combustion engine (10) in a multiple injection mode, in which an overall quantity of fuel which is to be fed to the internal combustion engine (10) in a working cycle of a cylinder (12) is determined as a function of a requested engine load, and the overall quantity of fuel is injected into the cylinder (12) by means of an injection valve (22) with at least two fuel injections during the working cycle of the cylinder (12) of the internal combustion engine (10), **characterized in that** in the case the fuel portions and valve opening times (Δt) of the individual injections of the working cycle differ from one another, while the overall quantity of fuel which is fed within the working cycle is unchanged, a quantity of fuel which is injected in a relatively short injection is increased at the cost of at least one relatively long injection to such an extent that a resulting valve opening time (Δt) of the injection valve (22) of at least one injection of the working cycle does not fall below a predefined valve opening time, wherein the predefined valve opening time corresponds to at least one critical valve opening time (Δt_{K}) during which a still tolerable average variation of a throughput rate of fuel (σ_{KS}) is present.

2. Method according to Claim 1, **characterized in that**, while the overall quantity of fuel which is fed within the working cycle is unchanged, a pressure (rail pressure, ρ_{R}), under which the fuel is kept ahead of the injection valve (22), is predefined in such a way that the resulting valve opening time (Δt) of the injection valve (22) of at least one injection of the working cycle does not fall below the predefined valve opening time.

3. Method according to Claim 2, **characterized in that** the rail pressure (ρ_{R}) is set to at most 35 bar, in particular to at most 30 bar, preferably to at most 25 bar.

4. Method according to one of Claims 2 to 3, **characterized in that** the rail pressure (ρ_{R}) is controlled as a function of an engine load and/or an engine rotational speed.

5. Method according to one of Claims 1 to 4, **characterized in that**, if all the valve opening times (Δt) of the injections of one working cycle lie below the predefined valve opening time and/or, if despite variation of the fuel portions of the individual injections, at least one valve opening time (Δt) of at least one injection lies below the predefined valve opening time (Δt_{K}), the overall quantity of fuel which is fed within one working cycle is increased to such an extent that the resulting valve opening time (Δt) of at least one injection of the working cycle does not fall below the predefined valve opening time.

6. Method according to Claim 5, **characterized in that** the overall quantity of fuel which is fed within one working cycle is not increased until a controller intervention of a lambda controller exceeds a predefinable threshold.

7. Method according to one of Claims 5 or 6, **characterized in that** an exploitable torque which is generated by the increased overall quantity of fuel is at least partially compensated by engine-efficiency-reducing measures, in particular by adjusting an ignition angle.

8. Method according to one of Claims 1 to 4, **characterized in that**, if all the valve opening times (Δt) of the injections of one working cycle lie below the predefined valve opening time and/or, if despite variation of the fuel portions of the individual injections, at least one valve opening time (Δt) of one injection lies below the predefined valve opening time, the multiple injection mode is blocked.

9. Method according to one of the preceding claims, **characterized in that** the predefined valve opening time corresponds to a ballistic valve opening time (Δt_{b}).

10. Method according to one of the preceding claims, **characterized in that** above the predefined valve opening time the injection valve (22) operates with an average variation of a throughput rate of fuel (σ_{KS}) of at most ± 20%, in particular of at most ± 15%, in particular of at most ± 10%.

11. Method according to one of the preceding claims, **characterized in that** the predefined valve opening time corresponds to 550 µs, in particular 600 µs, in particular 700 µs.

12. Method according to Claim 11, **characterized in that** the predefined valve opening time corresponds to 300 µs, in particular 350 µs, in particular 450 µs.

13. Method according to one of the preceding claims, **characterized in that** a quantity of fuel which is to be injected by an injection of a working cycle is feedback controlled as a function of a deviation of an actual quantity of fuel from a setpoint quantity of fuel, and a quantity of fuel which is to be injected by the at least one further injection of the working cycle is pilot-controlled.

14. Method according to one of the preceding claims, **characterized in that** all the injections of one working cycle are feedback controlled as a function of the deviation of the actual quantity of fuel from the setpoint quantity of fuel in proportion with the fuel portions which are to be injected thereof.

15. Method according to Claim 13 or 14, **characterized in that** until an operational readiness of a gas sensor for sensing the concentration of the exhaust gas component, in particular of a lambda probe, is reached, all the injections of a working cycle are pilot-controlled.

16. Method according to one of Claims 13 to 15, **characterized in that** the pilot control is carried out by means of engine-load-dependent characteristic diagrams.

17. Method according to one of Claims 13 to 16, **characterized in that** the feedback control of the setpoint quantity of fuel which is to be injected is carried out on the basis of a concentration of at least one exhaust gas component, in particular of oxygen, which is measured in the exhaust gas.

## Revendications

1. Procédé de commande de dosage de carburant en mode d'injection multiple d'un moteur à combustion interne (10) à injection directe, dans lequel une quantité totale de carburant à acheminer dans un temps de travail d'un cylindre (12) du moteur à combustion interne (10) est déterminée en fonction d'une charge exigée du moteur et la quantité totale de carburant est injectée dans le cylindre (12) au moyen d'une soupape d'injection (22) avec au moins deux injections de carburant pendant le temps de travail du cylindre (12) du moteur à combustion interne (10), **caractérisé en ce que** lorsque la quantité totale de carburant acheminée à l'intérieur du temps de travail est inchangée, et que les proportions de carburant et les temps d'ouverture des soupapes (Δt) des injections individuelles du temps de travail sont différents les uns des autres, une quantité de carburant injectée dans une injection plus courte est augmentée aux dépens d'au moins une injection plus longue dans la mesure où un temps d'ouverture de soupape s'établissant (Δt) de la soupape d'injection (22) n'est pas en dessous d'un temps d'ouverture de soupape prédéfini lors d'au moins une injection du temps de travail, le temps d'ouverture de soupape prédéfini correspondant au moins à un temps d'ouverture de soupape critique (Δt_{K}), dans lequel une dispersion moyenne encore tolérable d'un débit de carburant (σ_{KS}) a lieu.

2. Procédé selon la revendication 1, **caractérisé en ce qu'**en outre, lorsque la quantité totale de carburant acheminée à l'intérieur du temps de travail est inchangée, une pression (pression de rampe, p_{R}), en dessous de laquelle le carburant se présente devant la soupape d'injection (22), est prédéfinie de telle sorte que le temps d'ouverture de soupape s'établissant (Δt) de la soupape d'injection (22) ne soit pas en dessous du temps d'ouverture de soupape prédéfini lors d'au moins une injection du temps de travail.

3. Procédé selon la revendication 2, **caractérisé en ce que** la pression de rampe (p_{R}) est ajustée à 35 bars maximum, en particulier à 30 bars maximum, de préférence à 25 bars maximum.

4. Procédé selon l'une quelconque des revendications 2 à 3, **caractérisé en ce que** la pression de rampe (p_{R}) est commandée en fonction d'une charge du moteur et/ou d'un régime du moteur.

5. Procédé selon l'une quelconque des revendications 1 à 4, **caractérisé en ce qu'**au cas où tous les temps d'ouverture de soupape (Δt) des injections d'un temps de travail se situent en dessous du temps d'ouverture de soupape prédéfini et/ou qu'en dépit d'une variation des proportions de carburant des injections individuelles, au moins un temps d'ouverture de soupape (Δt) d'au moins une injection se situe en dessous du temps d'ouverture de soupape prédéfini (Δt_{K}), la quantité totale de carburant acheminée à l'intérieur d'un temps de travail est augmentée dans une mesure telle que le temps d'ouverture de soupape s'établissant (Δt) d'au moins une injection du temps de travail ne soit pas en dessous du temps d'ouverture de soupape prédéfini.

6. Procédé selon la revendication 5, **caractérisé en ce que** la quantité totale de carburant acheminée à l'intérieur d'un temps de travail est seulement augmentée lorsque qu'une intervention d'un régulateur lambda dépasse un seuil prédéfinissable.

7. Procédé selon l'une quelconque des revendications 5 ou 6, **caractérisé en ce qu'**un couple utile généré par la quantité totale de carburant augmentée est au moins en partie compensé par des mesures réduisant le rendement du moteur, en particulier par réglage d'un angle d'allumage.

8. Procédé selon l'une quelconque des revendications 1 à 4, **caractérisé en ce que** si tous les temps d'ouverture de soupape (Δt) des injections d'un temps de travail sont situés en dessous du temps d'ouverture de soupape prédéfini et/ou que malgré une variation des proportions de carburant des injections individuelles, au moins un temps d'ouverture de soupape (Δt) d'une injection se situe en dessous du temps d'ouverture de soupape prédéfini, le fonctionnement à injection multiple est bloqué.

9. Procédé selon l'une quelconque des revendications précédentes, **caractérisé en ce que** le temps d'ouverture de soupape prédéfini correspond à un temps d'ouverture de soupape balistique (Δt_{b}).

10. Procédé selon l'une quelconque des revendications précédentes, **caractérisé en ce qu'**au-dessus du temps d'ouverture de soupape prédéfini, la soupape d'injection (22) fonctionne avec une dispersion moyenne d'un débit de carburant (σ_{KS}) de ± 20 % maximum, en particulier de ± 15 % maximum, en particulier de ± 10 % maximum.

11. Procédé selon l'une quelconque des revendications précédentes, **caractérisé en ce que** le temps d'ouverture de soupape prédéfini correspond à 550 µs, en particulier à 600 µs, en particulier à 700 µs.

12. Procédé selon la revendication 11, **caractérisé en ce que** le temps d'ouverture de soupape prédéfini correspond à 300 µs, en particulier à 350 µs, en particulier à 450 µs.

13. Procédé selon l'une quelconque des revendications précédentes, **caractérisé en ce qu'**une quantité de carburant devant être injectée par une injection d'un temps de travail est régulée en fonction d'un écart d'une quantité actuelle de carburant par rapport à une quantité de carburant de consigne, et il est effectué une commande pilote d'une quantité de carburant à injecter par l'au moins une injection supplémentaire du temps de travail.

14. Procédé selon l'une quelconque des revendications précédentes, **caractérisé en ce que** toutes les injections d'un temps de travail sont régulées en fonction de l'écart de la quantité actuelle de carburant par rapport à la quantité de carburant de consigne de manière proportionnelle à leurs proportions de carburant à injecter.

15. Procédé selon la revendication 13 ou 14, **caractérisé en ce que** toutes les injections d'un temps de travail sont effectuées par commande pilote jusqu'à l'obtention d'une disponibilité de fonctionnement d'un capteur de gaz pour détecter la concentration du composant de gaz d'échappement, en particulier d'une sonde lambda.

16. Procédé selon l'une quelconque des revendications 13 à 15, **caractérisé en ce que** la commande pilote s'effectue au moyen de champs caractéristiques dépendant de la charge du moteur.

17. Procédé selon l'une quelconque des revendications 13 à 16, **caractérisé en ce que** la régulation de la quantité de carburant de consigne à injecter s'effectue à l'aide d'une concentration d'au moins un composant du gaz d'échappement, en particulier d'oxygène, mesurée dans le cas échappement.
